# EUROPÄISCHE PATENTSCHRIFT

(11) **EP 1 721 066 B1**
(45) Veröffentlichungstag und Bekanntmachung des Hinweises auf die Patenterteilung: **23.05.2007**
(21) Anmeldenummer: 05701393.0
(22) Anmeldetag: 10.02.2005
(51) Int. Cl.: F01L 1/047, F16H 53/02

(54) **GEBAUTER MEHRFACHNOCKEN**
BUILT MULTIPLE CAM
CAME MULTIPLE

(30) Priorität: 23.02.2004 DE 102004009074
(43) Veröffentlichungstag der Anmeldung: 15.11.2006
(73) Patentinhaber: ThyssenKrupp Presta AG, 9492 Eschen (LI)
(72) Erfinder: WALZ, Thomas, A-6822 Satteins (AT)
(74) Vertreter: Adams, Steffen
(86) Internationale Anmeldenummer: PCT/EP2005/001327
(87) Internationale Veröffentlichungsnummer: WO 2005/090756

(56) Entgegenhaltungen:
- EP-A- 1 057 979
- EP-A- 1 362 986
- WO-A-02/16741
- WO-A-98/26161
- DE-A1- 3 638 310
- DE-A1- 19 755 113
- US-A- 3 882 832
- US-A- 5 558 507

## Beschreibung

Die Erfindung betrifft einen gebauten Mehrfachnocken gemäß Patentanspruch 1, eine Nockenwelle mit mindestens einem gebauten Mehrfachnocken gemäß Patentanspruch 11 sowie ein Verfahren zum Herstellen einer Nockenwelle mit mindestens einem gebauten Mehrfachnocken gemäß den Patentansprüchen 12, 13 und 14.

Die Weiterentwicklung auf dem Gebiet der ventilgesteuerten Verbrennungsmotoren stellt immer größere Anforderungen an die eingesetzten Nockenwellen zur Steuerung der Ventile. Ein wichtiger Trend besteht dabei im Einsatz von Techniken zur variablen Steuerung der Ventilsteuerzeiten. Dabei haben sich gerade in jüngster Zeit Systeme etabliert, bei denen die Ventilerhebung durch zwei voneinander verschiedene Nockenkonturen gesteuert wird, sodass zwischen zwei verschiedenen Ventilerhebungen umgeschaltet werden kann. Hierzu werden Nockenwellen mit Mehrfachnocken verwendet, an denen mindestens zwei verschiedene Nockenkonturen ausgebildet sind. Als Beispiel für ein solches System kann das System "VarioCam Plus" angegeben werden, das in Fahrzeugen der Firma Porsche verwendet wird. Bei diesem System kommen sogenannte schaltbare Tassenstößel zum Einsatz, deren Funktionsweise dem Fachmann auf dem einschlägigen technischen Gebiet bekannt ist.

Zur besseren Verteilung der Kräfte im Kraftfluss zwischen Nocken und Nockenfolger (z.B. einem schaltbaren Tassenstößel) wird der Nocken üblicherweise in drei Teile geteilt, wobei zwischen zwei gleichen, voneinander axial beabstandeten äußeren Nocken mit gleicher Nockenkontur ein innerer zweiter Nocken mit einer zweiten Nockenkontur angeordnet ist, die von der Nockenkontur der äußeren Nocken verschieden ist. Aus dem Stand der Technik ist es bekannt, dass derartige Mehrfachnocken z.B. durch Fräsen in einem Stück oder durch das Zusammengruppieren von drei separaten Nocken gebildet werden können.

Aus der DE 196 06 732 C2 sind Mehrfachnocken bekannt, welche aus mehreren Einzelteilen bestehen, die in axialer Richtung zusammengesetzt sind. Die Einzelteile werden dabei durch abschnittweise nichtrunde Rohrabschnitte gebildet, die an den einander zugewandten Enden konzentrische ringförmige Ansätze aufinreisen. Diese Ansätze werden zusammengesteckt, um aus den Einzelteilen einen Mehrfachnocken zu bilden. Diese konzentrischen ringförmigen Ansätze sind im Querschnitt kreisrund ausgebildet und weisen etwa die halbe Wandstärke des Rohrabschnittes auf. Dadurch wird erreicht, dass nach dem Zusammenstecken der Einzelteile auch im Bereich der zusammengesteckten Ansätze die volle Wandstärke der Rohrabschnitte vorliegt.

Die aus der DE 196 06 732 C2 bekannten Mehrfachnocken weisen den Nachteil auf, dass die Verbindung zwischen den Einzelteilen im Bereich der konzentrischen ringförmigen Abschnitte vergleichsweise schwach ist. Insbesondere ist die Verbindung zwischen den Einzelteilen nicht ausreichend verdrehfest. Es kommt hinzu, dass die in der DE 196 06 732 C2 offenbarten Mehrfachnocken nur für solche Nockenwellen geeignet sind, welche nach dem Verfahren des Innenhochdruckumformens hergestellt werden.

Der Erfindung liegt die Aufgabe zugrunde, einen gebauten Mehrfachnocken zur Verfügung zu stellen, der kostengünstig herstellbar und flexibel einsetzbar ist und der einen geringen Bauraum in axialer Richtung beansprucht. Er soll insbesondere mit Hilfe einfacher Fügeverfahren auf die Tragwelle der Nockenwelle gefügt werden können und auch für gebaute Nockenwellen verwendbar sein, die nicht nach dem Verfahren des Innenhochdruckumformens hergestellt werden. Der Erfindung liegt ferner die Aufgabe zugrunde, eine Nockenwelle zur Verfügung zu stellen, die kostengünstig herstellbar und für die Anwendung in Ventilgetrieben mit unterschiedlichen Nockenfolgern, wie schaltbaren Tassenstößeln, Rollenhebeln oder ähnlichem geeignet ist. Schließlich liegt der Erfindung die Aufgabe zugrunde, ein Verfahren anzugeben, mit dem solche gebauten Nockenwellen herstellbar sind.

Diese Aufgabe wird hinsichtlich des Mehrfachnockens erfindungsgemäß durch einen Mehrfachnocken mit den Merkmalen des Patentanspruchs 1 gelöst. Hinsichtlich der Nockenwelle wird die Aufgabe durch eine Nockenwelle mit den Merkmalen des Patentanspruchs 11 gelöst. Im Hinblick auf das Verfahren wird die Aufgabe durch die Patentansprüche 12, 13 und 14 gelöst.

Der erfindungsgemäße Mehrfachnocken setzt sich aus drei Einzelteilen zusammen, nämlich zwei Teilnocken und einem diese Teilnocken miteinander verbindenden Ring. Jedes dieser Einzelteile ist massentechnisch kostengünstig herstellbar. Sowohl die Teilnocken als auch der Ring weisen an ihren Außenseiten Nockenkonturen auf. Dadurch, dass der Ring auf die Außenflächen der Fügekonturen der Teilnocken aufgeschoben wird, sind die für die feste Verbindung zwischen diesen drei Bauteilen benötigten Verbindungsmittel radial unter dem Ring angeordnet und beanspruchen keinen zusätzlichen axialen Bauraum. Durch diese Anordnung ergibt sich ein Mehrfachnocken, der einen geringen Bauraum in axialer Richtung beansprucht.

Die Einzelteile des Mehrfachnockens können unabhängig voneinander auf völlig unterschiedliche Weise hergestellt werden. So können die Teilnocken z.B. sowohl sintertechnisch als auch durch Kalt- oder Warmformung (Schmieden) erzeugt werden. Es ist auch denkbar, die Teilnocken durch spanabhebende Fertigungsverfahren (Fräsen, Drehen) herzustellen. Die Auswahl des Fertigungsverfahrens und des Werkstoffes für die Teilnocken kann somit in Abhängigkeit von den Belastungen der Nocken im Motorbetrieb gewählt werden. Der Ring kann entweder als Stahlring, z.B. als Abschnitt eines gezogenen Rohres, als Warm- oder Kaltformteil oder auch als Sinterteil hergestellt sein. Auch ist es möglich, den Ring direkt aus dem Vollen durch spanabhebende Fertigungsverfahren herzustellen. Auch für den Ring ist die Auswahl des Fertigungsverfahrens und Werkstoffes auf die im Motorbetrieb erforderlichen Festigkeiten abstimmbar.

Die Teilnocken und der Ring können jeweils auf gesonderte Art gehärtet und bei Bedarf angelassen werden. Dabei sind allle Härte- und Vergütungsverfahren einsetzbar und frei kombinierbar, da die drei den Mehrfachnocken bildenden Einzelteile nicht gemeinsam behandelt werden müssen. Beispielsweise ist es möglich, die Teilnocken induktiv zu härten und den Ring im Plasma zu nitrieren oder als Schüttgut zu härten.

Bei dem erfindungsgemäßen Mehrfachnocken weist der Ring eine nichtrunde Innenkontur auf. Dementsprechend sind auch die Fügekonturen der Teilnocken in der gleichen Weise unrund ausgebildet, um das Aufschieben des Ringes zu ermöglichen. Auf diese Weise wird ein in Umfangsrichtung wirksamer Formschluss zwischen dem Ring und den Teilnocken erzielt. Dieser Formschluss stellt sicher, dass der Mehrfachnocken nach dem Zusammenschieben der Einzelteile in Umfangsrichtung verdrehfest vormontiert ist.

Die zwischen dem Ring und den Teilnocken wirksamen Verbindungsmittel sind vorteilhaft als Presssitz ausgebildet. Zur Realisierung eines solchen Presssitzes werden beispielsweise die Fügekonturen der Teilnocken und die Innenkontur des Ringes hinsichtlich ihrer Fertigungstoleranzen in bekannter Weise so bemessen, dass die aufeinandergeschobenen Flächen einen Presssitz bilden. Auf diese Weise wird der Arbeitsaufwand für die Vormontage des Mehrfachnockens gering gehalten, denn es sind neben dem Aufschieben des Ringes auf die Fügekonturen der Teilnocken keine weiteren separaten Arbeitsschritte notwendig, um die gewünschte feste Verbindung zwischen den Bauteilen zu erreichen.

Nachdem die Nockenwelle fertig zusammengebaut ist, wird die Fertigkontur der Nocken durch Schleifen erzeugt. Um auch das Schleifen der Nockenkontur des Ringes problemlos durchführen zu können, ist eine axiale Beabstandung der Nockenkontur des Ringes von der der Teilnocken vorteilhaft. Diese axiale Beabstandung wird auch als Freistellung bezeichnet. Um diese Freistellung auf einfache Weise zu erreichen, weist mindestens ein Teilnocken im Bereich des Übergangs von der Fügekontur auf die Nockenkontur eine Schulter auf, welche die Außenfläche des Teilnockens in radialer Richtung überragt. Diese Schulter wirkt beim Aufschieben des Ringes auf die Fügekontur als Abstandshalter, der die gewünschte axiale Beabstandung der Nockenkontur des Ringes zu den Nockenkonturen der Teilnocken bewirkt. Über die Bemessung der axialen Erstreckung der Schulter kann das Maß dieser Beabstandung nach den Erfordernissen des Einzelfalls eingestellt werden. Die Schulter kann ein integraler Bestandteil des Teilnockens sein (beispielsweise ein Radius oder eine Sinterfase) oder durch ein gesondertes Bauteil wie z.B. ein der Fügekontur des Teilnockens angepasstes Ringelement gebildet werden. Auch kann die Freistellung ein integraler Bestandteil des mittleren Ringes sein.

Um die Fertigungskosten und den den Aufwand bei der Herstellung der Teilnocken gering zu halten, ist es wünschenswert, die im zusammengebauten Zustand des Mehrfachnockens einander zugewandten Stirnflächen der Teilnocken nicht mechanisch nachbearbeiten zu müssen (z.B. durch Schleifen). Eine derartige mechanische Nachbearbeitung kann unterbleiben, wenn sich die genannten Stirnflächen der Teilnocken im zusammengebauten Zustand nicht berühren, d.h. wenn ein Spalt zwischen ihnen verbleibt. Ein solcher Spalt wird auf einfache Weise dadurch erreicht, dass der Ring eine axiale Erstreckung aufweist, die größer ist als die Summe der axialen Erstreckungen der Fügekonturen der Teilnocken. Auf diese Weise hält der Ring die genannten Stirnflächen der Teilnocken zueinander auf Abstand.

Um eine besonders gute Festigkeit der Verbindung zwischen dem Ring und den Teilnocken zu erreichen und die Fügeoperation zwischen dem Ring und den Teilnocken zu erleichtern, ist vorteilhaft auf den Außenflächen der Fügekonturen der Teilnocken und/oder auf der Innenfläche der Innenkontur des Ringes eine Gravur vorgesehen. Diese Gravur kann z.B. durch Rollieren oder Rändeln aufgebracht werden. Beim Aufschieben des Ringes auf die Fügekonturen der Teilnocken ergibt sich somit in für den Fachmann bekannter Weise ein kraft- und/oder formschlüssiger Sitz des Rindes auf den Fügekonturen der Teilnocken, was zu einer besonders festen Verbindung der Bauteile miteinander führt. Vorteilhaft ist außerdem, dass durch diese Gravuren die an die Einzelteile des Mehrfachnockens (Teilnocken und Ring) zu stellenden Toleranzanforderungen erheblich gesenkt werden können. Werden die Teilnocken im Sinterverfahren hergestellt, kann diese Gravur diese Gravur direkt beim Sintern als gezackte, in Axialrichtung verlaufende Verzahnung mit radial nach außen zeigenden Zahnspitzen ausgebildet werden. In diesem Fall kann der Ring zusätzlich eine Gravur aufweisen, die z.B. durch Rändelung oder Rollierung hergestellt wurde. Ebenfalls ist es möglich, die Teilnocken als Sinterteile ohne Gravur herzustellen und die Gravur nur an dem Ring vorzusehen.

Um das Aufschieben des Ringes auf die Fügekonturen der Teilnocken zu erleichtern, weist die Innenkontur des Ringes vorteilhaft an ihren axialen Endbereichen eine radiale Aufweitung auf. In analoger Weise wird das Auffädeln des vormontierten Mehrfachnockens bzw. der Teilnocken auf die Tragwelle erleichtert, wenn die Bohrung der Teilnocken eine Innenkontur aufweist, die im Bereich derjenigen Stirnflächen, die zuerst über die Tragwelle geschoben werden, bzw. an dem Ende, das auf die Tragwelle aufgeschoben wird, gegenüber der Bohrung trichterförmig aufgeweitet ist.

Eine Nockenwelle, die einen oder mehrere erfindungsgemäße Mehrfachnocken trägt, ist wegen der kostengünstigen Herstellbarkeit der Mehrfachnocken selbst kostengünstig herstellbar. Sie eignet sich wegen des geringen axialen Bauraumbedarfs der Mehrfachnocken insbesondere für die Betätigung von schaltbaren Tassenstößeln, bei denen es bekanntermaßen darauf ankommt, auf axial sehr begrenztem Raum zwei Nocken mit unterschiedlichen Nockenkonturen unterzubringen, um unterschiedlich große Ventilhübe zu erzielen. Die Verwendung einer erfindungsgemäßen Nockenwelle ist jedoch nicht auf den Anwendungsfall "schaltbare Tassenstößel" beschränkt. Sie kann flexibel und vorteilhaft auch für die Betätigung anderer Nockenfolger wie z.B. Rollenhebeln eingesetzt werden.

Bei der Erfindung ist es vorteilhaft, dass der Mehrfachnocken ohne Zuhilfenahme weiterer Bauteile nur durch das Zusammenschieben der drei Bauteile "erster Teilnocken", "Ring" und "zweiter Teilnocken" vormontiert werden kann. Die Bauteile des vormontierten Mehrfachnockens sind dabei derart fest miteinander verbunden, dass der Mehrfachnocken für den weiteren Zusammenbau der Nockenwelle sicher gehandhabt werden kann.

Mit solch einem Mehrfachnocken kann der Zusammenbau der Nockenwelle auf einfache Weise dadurch erfolgen, dass der vormontierte Mehrfachnocken auf eine Tragwelle bis zu einem vorgegebenen Abschnitt der Tragwelle aufgeschoben wird und beim Aufschieben bzw. daran anschließend der Mehrfachnocken axial und verdrehfest auf diesem vorgegebenen Abschnitt der Tragwelle festgesetzt wird. Das Festsetzen kann dabei auf unterschiedliche Weise erfolgen. So kann z.B. die Befestigung des Mehrfachnockens auf der Tragwelle mittels eines Strahlschweißverfahrens, beispielsweise Laser- oder Elektronenstrahlschweißen, festgeschweißt werden. Alternativ kann die Befestigung in an sich bekannter Weise durch Kraft- und/oder Formschluss erreicht werden. Hierzu kann der Mehrfachnocken entweder über einen zuvor durch Rollierung oder Rändelung aufgeweiteten Tragwellenabschnitt geschoben werden oder die Tragwelle wird im Bereich des Mehrfachnockens nach dessen Positionierung durch Innenhochdruckumformung aufgeweitet. Während das Aufweiten durch Rollieren oder Rändeln sowohl bei hohlen als auch bei massiven Tragwellen einsetzbar ist, kann das Aufweiten durch Innenhochdruckumformung nur bei hohlen Tragwellen eingesetzt werden. Schließlich ist es auch möglich, durch Schleifen oder Walzen Durchmesserunterschiede in die Tragwelle einzubringen und den Mehrfachnocken an den Axialpositionen mit größerem Durchmesser festzusetzen.

Ein zum voranstehend beschriebenen Herstellungsverfahren alternatives Herstellungsverfahren ist in Patentanspruch 13 angegeben. Gemäß diesem Verfahren wird eine Tragwelle bereitgestellt, die mindestens einen Abschnitt aufweist, der durch Rollieren oder Rändeln derart oberflächenbearbeitet worden ist, dass er einen gegenüber den nicht bearbeiteten Abschnitten der Tragwelle erhöhten Außendurchmesser aufweist. Auf diese Tragwelle wird sodann der erste Teilnocken, dann der Ring und dann der zweite Teilnocken auf einen Abschnitt der Tragwelle aufgeschoben, dessen Außendurchmesser nicht durch Rollieren oder Rändeln erhöht worden ist und der an den Abschnitt mit dem erhöhten Außendurchmesser angrenzt. Das Aufschieben erfolgt dabei so, dass die Fügekonturen der Teilnocken dem Ring zugewandt sind und die gewünschte Winkellage der Teilnocken und des Ringes gegenüber der Tragwelle eingestellt ist. Daran anschließend erfolgt ein Aufpressen des ersten Teilnockens, des Ringes und des zweiten Teilnockens durch gemeinsames Aufschieben dieser Bauteile auf den rollierten oder gerändelten Abschnitt der Tragwelle, wobei sich der Ring mit seiner Innenfläche über die Außenflächen der Teilnocken schiebt, sodass der Mehrfachnocken gebildet und an der vorgesehenen Position, d.h. auf dem vorgesehenen Abschnitt der Tragwelle kraft- und/oder formschlüssig axial und verdrehfest festgesetzt wird.

Der Vorteil des vorstehend beschriebenen gemeinsamen Aufschiebens der Teilnocken und des Ringes besteht darin, dass nur ein Arbeitsgang benötigt wird, um den Mehrfachnocken zu bilden und diesen gleichzeitig an der vorgesehenen Stelle der Tragwelle festzusetzen. Selbstverständlich ist es aber auch möglich, die einzelnen Bauteile einzeln und nacheinander über den rollierten oder gerändelten Abschnitt der Tragwelle zu schieben.

In einer weiteren Ausführungsform werden auf die oben beschriebene Weise auch Mehrfachnocken mit mehr als 3 Nockenkonturen gebildet. Dann besitzen die Teilnocken jeweils eine Nockenkontur für die Betätigung eines Nockenfolgers und axial dazu versetzt zwei Fügekonturen. So wird ein Mehrfachnocken, bestehend aus mehreren Ringen und mehreren Teilnocken gebildet. Den axialen Abschluss des Mehrfachnockens bilden jeweils Teilnocken mit nur einer Fügekontur.

Weiterhin ist es auch möglich, die Fügekonturen an den Teilnocken und die Innenkonturen an den Ringen im wesentlichen kreisrund auszubilden. Dabei können die Fügekonturen konzentrisch zur Tragwelle ausgebildet sein.

Im Folgenden wird die Erfindung anhand einer Zeichnung näher erläutert. Im Einzelnen zeigen
- Fig. 1 :: die Einzelteile eines erfindungsgemäßen Mehrfachnockens im Axialschnitt;
- Fig. 2:: die Einzelteile eines erfindungsgemäßen Mehrfachnockens in perspektivischer Darstellung;
- Fig. 3:: einen zusammengebauten Mehrfachnocken, der auf einen vorgegebenen Abschnitt einer Tragwelle aufgeschoben ist, im Axialschnitt;
- Fig. 4:: eine perspektivische Ansicht eines vormontierten erfindungsgemäßen Mehrfachnockens.

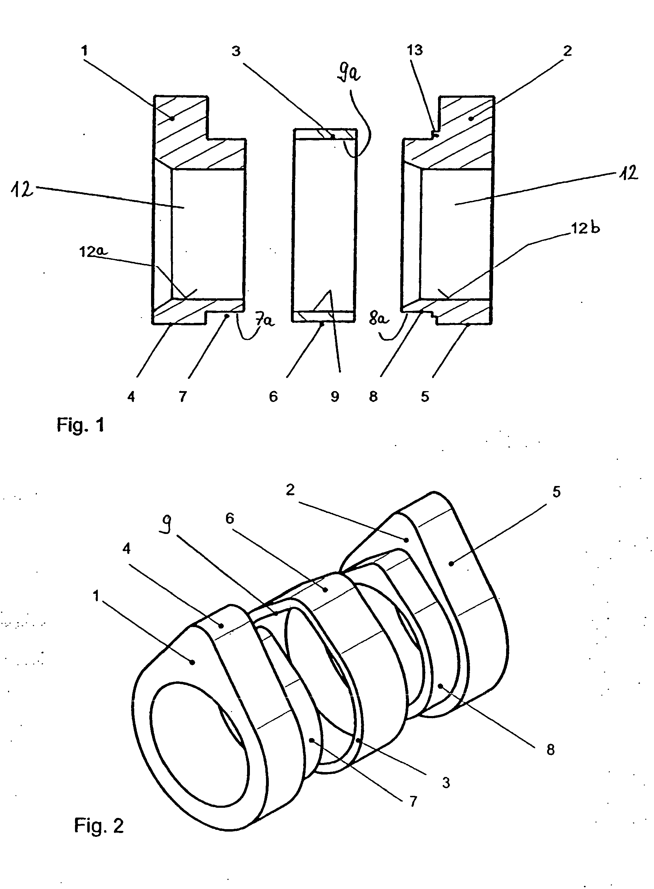

Fig. 1 zeigt einen Teilnocken 1, der eine Bohrung 12, eine äußere Nockenkontur 4 und eine Fügekontur 7 aufweist. In analoger Weise weist der Teilnocken 2 eine Bohrung 12, eine Nockenkontur 5 und eine Fügekontur 8 auf. Zusätzlich ist am Teilnocken 2 eine Schulter 13 vorgesehen, die integral mit dem Teilnocken 2 ausgebildet ist. Die Bohrungen 12 der Teilnocken 1 und 2 sind gleich groß. Der Ring 3 weist eine äußere Nockenkontur 6 auf sowie eine Innenkontur 9, die eine Innenfläche 9a besitzt. Wenn aus den in Fig. 1 dargestellten Einzelteilen ein Mehrfachnocken zusammengebaut werden soll, so wird der Ring 3 mit seiner Innenfläche 9a über die Außenflächen 7a, 8a der Fügekonturen 7, 8 geschoben. Beim Zusammenschieben bildet sich ein Presssitz zwischen der Innenfläche 9a und den Außenflächen 7a, 8a der Fügekonturen 7, 8 aus. Um eine besonders große Festigkeit dieses Presssitzes zu erreichen, sind die Außenflächen 7a, 8a der Fügekonturen 7, 8 und/oder die Innenfläche 9a des Ringes 3 mit Gravuren versehen, die z.B. durch Rollieren oder Rändeln aufgebracht worden sind.

In Fig. 2 ist deutlich zu erkennen, dass die Fügekonturen 7, 8 der Teilnocken 1, 2 ebenso wie die Innenkontur 9 des Ringes 3 unrund ausgebildet sind. Auf diese Weise wird erreicht, dass die Innenkontur 9 des Ringes 3 einen Formschluss mit den Fügekonturen 7, 8 der Teilnocken 1, 2 ausbildet. Auf diese Weise ist sichergestellt, dass die Bauteile in Umfangsrichtung verdrehfest zueinander positioniert sind.

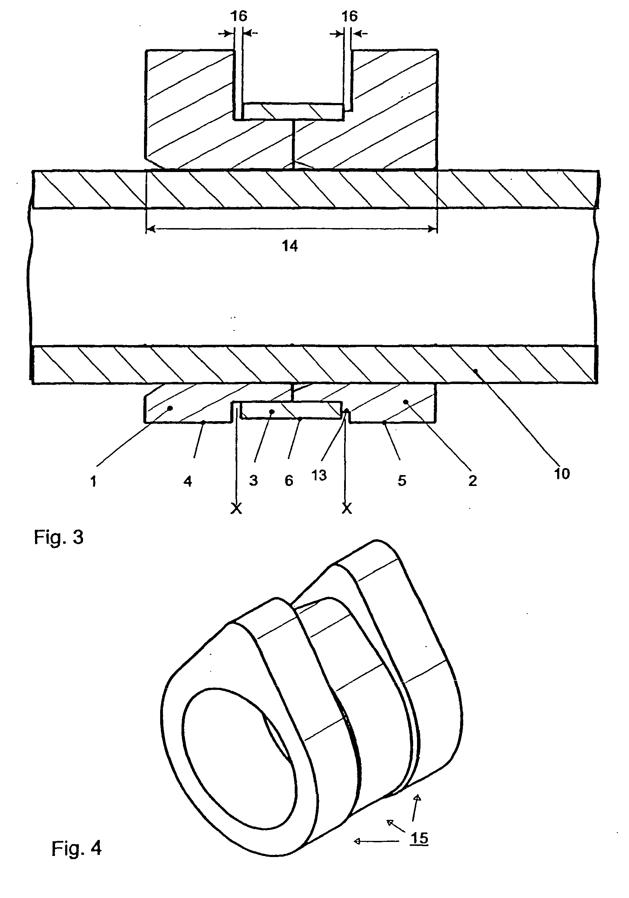

Die in Fig. 3 im Axialschnitt dargestellte Tragwelle 10 weist einen Abschnitt 14 auf, der vor dem Aufschieben des vormontierten Mehrfachnockens durch Rollieren oder Rändeln oberflächenbehandelt wurde, sodass in diesem Abschnitt 14 ein gegenüber dem übrigen Durchmesser der Tragwelle 10 erhöhter Außendurchmesser vorliegt. Um den Mehrfachnocken axial und verdrehfest auf dem Abschnitt 14 der Tragwelle 10 anzuordnen, ist der Mehrfachnocken zunächst unabhängig von der Tragwelle 10 vormontiert worden. Hierzu ist der Ring 3 zunächst auf den Teilnocken 2 aufgeschoben worden. Anschließend ist der Ring 3 auf die entsprechende Fügekontur 7 des Teilnockens 1 aufgeschoben worden, sodass der vormontierte Mehrfachnocken entstanden ist. Dieser Mehrfachnocken ist sodann auf einen nichtrollierten bzw. nichtgerändelten Bereich der Tragwelle 10 aufgeschoben und an den rollierten bzw. gerändelten Abschnitt 14 herangeschoben worden. Dabei können die Innenflächen der Bohrungen 12 der Teilnocken 1, 2 eine Verzahnung aufweisen, deren Zahnspitzen in axialer Richtung verlaufen. Dabei ist es günstig, wenn die Zahntiefe etwa 0,01 mm bis 0,1 mm beträgt. Des Weiteren verfügt die Bohrung 12 mindestens an dem Ende, mit dem sie auf die Tragwelle 10 aufgeschoben wird, über eine trichterartige Aufweitung, die das Auffädeln des betroffenen Teilnockens auf die Tragwelle 10 erleichtert. Geeignete Werte für diese Durchmesseraufweitung der Bohrung 12 liegen, in Anpassung an die durch die Rollierung erreichte Aufweitung der Tragwelle, im Bereich von 0,05 mm bis 0,33 mm. Werden die vorstehend genannten Dimensionierungen für die Zahntiefe bzw. die Durchmesseraufweitung eingehalten, so führt dies zur Realisierung eines Form- und Kraftschlusses. Die trichterartige Aufweitung kann auch an jedem Teilnocken ausgebildet sein.

Nachdem der vormontierte Mehrfachnocken an den in vorstehend beschriebener Weise vorbereiteten Abschnitt 14 herangeschoben worden ist, kann der Mehrfachnocken auf den Abschnitt 14 aufgeschoben werden. Hierbei bildet sich eine form- und/oder kraftschlüssige Verbindung zwischen der Tragwelle 10 und den Teilnocken 1, 2 des Mehrfachnockens aus. Es ist darauf hinzuweisen, dass der erfindungsgemäße Mehrfachnocken eine vergleichsweise große Fügelänge aufweist, wodurch die Festigkeit der Verbindung erhöht und die Belastung der Teilnocken 1, 2 beim Fügeprozess verringert wird.

Alternativ zu der vorbeschriebenen Art und Weise des Festsetzens des Mehrfachnockens auf dem Abschnitt 14 der Tragwelle 10 kann das Festsetzen des Mehrfachnockens durch Strahlschweißen erfolgen. In diesem Fall wird bei der in Fig. 3 dargestellten Anordnung der Schweißstrahl vorteilhaft entlang des Spaltes 16 geführt. Somit erfolgt die Schweißverbindung in einem Bereich des Mehrfachnockens, der nicht mit dem Nockenfolger (nicht dargestellt) in Kontakt steht. In Fig. 3 sind die Schweißstrahlen durch die mit X gekennzeichneten Linien angedeutet. Wird das Festsetzen des Mehrfachnockens auf der Tragwelle 10 mittels Strahlschweißen vorgenommen, so ist es unerheblich, ob die Schulter 13 nur an einem oder an beiden Teilnocken 1, 2 ausgebildet ist. Ebenso ist es unerheblich, ob die Schulter 13, wie in Fig. 3 dargestellt, einstückig mit dem Teilnocken 2 ausgebildet ist oder ob sie als separates Bauteil ausgebildet ist.

In Fig. 4 ist ein vormontierter Mehrfachnocken 15 in perspektivischer Darstellung gezeigt. Diesen vormontierten Mehrfachnocken 15 erhält man in der vorbeschriebenen Weise, nämlich indem man die in den Fig. 1 und 2 dargestellten Einzelteile (Teilnocken 1, Ring 3, Teilnocken 2) durch das Aufschieben des Ringes 3 auf die Fügekonturen 7, 8 zusammenfügt.

### Bezugszeichenliste

- 1.: Teilnocken
- 2.: Teilnocken
- 3.: Ring
- 4.: Nockenkontur
- 5.: Nockenkontur
- 6.: Nockenkontur
- 7.: Fügekontur
- 7a: Außenfläche
- 8.: Fügekontur
- 8a: Außenfläche
- 9.: Innenkontur
- 9a: Innenfläche
- 10.: Tragwelle
- 12.: Bohrung
- 12a: Innenkontur
- 12b: Innenkontur
- 13.: Schulter
- 14.: Abschnitt
- 15.: Mehrfachnocken
- 16.: Spalt
- X: Schweißstrahl

## Patentansprüche

1. Gebauter Mehrfachnocken für eine Nockenwelle, umfassend
• einen ersten Teilnocken (1) mit einer Bohrung (12), einer Nockenkontur A (4) und einer axial neben dieser angeordneten, eine Außenfläche (7a) aufweisenden Fügekontur (7),
• einen zweiten Teilnocken (2) mit einer Bohrung (12), einer Nockenkontur A (5) und einer axial neben dieser angeordneten, eine Außenfläche (8a) aufweisenden Fügekontur (8),
• einen Ring (3) mit einer von der Nockenkontur A verschiedenen Nockenkontur B (6) und einer eine Innenfläche (9a) aufweisenden Innenkontur (9), wobei der Ring (3) mit seiner Innenfläche (9a) auf die Außenflächen (7a, 8a) der Teilnocken (1, 2) aufschiebbar ist,
• sowie Verbindungsmittel, die zwischen dem Ring (3) und den Teilnocken (1, 2) wirksam sind und eine feste Verbindung zwischen diesen Bauteilen sicherstellen.

2. Gebauter Mehrfachnocken nach Anspruch 1, **dadurch gekennzeichnet, dass** die Innenkontur (9) des Ringes (3) und die Fügekonturen (7, 8) der Teilnocken (1, 2) unrund sind.

3. Gebauter Mehrfachnocken nach Anspruch 1 oder 2, **dadurch gekennzeichnet, dass** die Verbindungsmittel, die zwischen dem Ring (3) und den Teilnocken (1, 2) wirksam sind, als Presssitz und/oder Formschluss ausgebildet sind.

4. Gebauter Mehrfachnocken nach Anspruch 1 bis 3, **dadurch gekennzeichnet, dass** an zumindest einem der beiden Teilnocken (1, 2) im Bereich des Übergangs von der Fügekontur (7, 8) auf die Nockenkontur (4, 5) eine Schulter (13) angeordnet ist, welche die Außenfläche (7a, 8a) des Teilnockens (1, 2) in radialer Richtung überragt.

5. Gebauter Mehrfachnocken nach Anspruch 4, **dadurch gekennzeichnet, dass** die Schulter (13) einstückig mit dem Teilnocken (1, 2), beispielsweise als Radius oder Fase, ausgebildet ist.

6. Gebauter Mehrfachnocken nach einem der voranstehenden Ansprüche, **dadurch gekennzeichnet, dass** die axiale Erstreckung des Ringes (3) größer ist als die Summe der axialen Erstreckungen der Fügekonturen (7, 8).

7. Gebauter Mehrfachnocken nach einem der voranstehenden Ansprüche, **dadurch gekennzeichnet, dass** die Außenflächen (7a, 8a) mit einer Gravur, die beispielsweise durch eine Rollierung oder Rändelung aufgebracht wurde, versehen sind.

8. Gebauter Mehrfachnocken nach einem der voranstehenden Ansprüche, **dadurch gekennzeichnet, dass** die innere Ringfläche (9a) eine Gravur oder eine axial verlaufende Verzahnung aufweist.

9. Gebauter Mehrfachnocken nach einem der voranstehenden Ansprüche, **dadurch gekennzeichnet, dass** die Innenkontur (9) des Ringes (3) an ihren axialen Endbereichen eine radiale Aufweitung aufweist.

10. Gebauter Mehrfachnocken nach einem der voranstehenden Ansprüche, **dadurch gekennzeichnet, dass** die Bohrung (12) in mindestens einem Endbereich mindestens eines der Teilnocken (1, 2) eine Innenkontur (12a, 12b) aufweist, die gegenüber der Bohrung (12) trichterförmig aufgeweitet ist.

11. Gebaute Nockenwelle mit mindestens einem Mehrfachnocken nach einem der Ansprüche 1 bis 10.

12. Verfahren zum Herstellen gebauter Nockenwellen mit mindestens einem Mehrfachnocken (15) nach einem der Ansprüche 1 bis 10, **gekennzeichnet durch** folgende Verfahrensschritte:
a) Zusammenbau des Mehrfachnockens (Vormontage);
b) Aufschieben des vormontierten Mehrfachnockens auf eine Tragwelle (10) bis zu einem vorgegebenen Abschnitt (14) der Tragwelle (10);
c) axiales und verdrehfestes Festsetzen des Mehrfachnockens auf diesem vorgegebenen Abschnitt (14) der Tragrolle (10).

13. Verfahren zum Herstellen gebauter Nockenwellen mit mindestens einem Mehrfachnocken (15) nach einem der Ansprüche 1 bis 10, **gekennzeichnet durch** folgende Verfahrensschritte:
a) Bereitstellen einer Tragwelle (10), die mindestens einen Abschnitt (14) aufweist, der **durch** Rollieren oder Rändeln derart oberflächenbearbeitet worden ist, dass er einen gegenüber den nicht bearbeiteten Abschnitten der Tragwelle (10) erhöhten Außendurchmesser aufweist,
b) Aufschieben des ersten Teilnockens (1), des Ringes (3) und des zweiten Teilnockens (2) auf einen Abschnitt der Tragwelle (10), dessen Außendurchmesser nicht **durch** Rollieren oder Rändeln erhöht worden ist und der an den oberflächenbearbeiteten Abschnitt (14) angrenzt, wobei das Aufschieben so erfolgt, dass die Fügekonturen (7, 8) der Teilnocken (1, 2) dem Ring (3) zugewandt sind und die gewünschte Winkellage der Teilnocken (1, 2) und des Ringes (3) gegenüber der Tragwelle (10) eingestellt ist,
c) Aufpressen des ersten Teilnockens (1), des Ringes (3) und des zweiten Teilnockens (2) **durch** gemeinsames Aufschieben dieser Bauteile auf den oberflächenbearbeiteten Abschnitt (14) der Tragwelle (10), wobei sich der Ring (3) mit seiner Innenfläche (9a) über die Außenflächen (7a, 8a) der Teilnocken (1, 2) schiebt, sodass der Mehrfachnocken gebildet und an der vorgesehenen Position (Abschnitt (14)) kraft- und/oder formschlüssig axial und verdrehfest festgesetzt wird.

14. Verfahren zum Herstellen gebauter Nockenwellen, die eine Tragwelle (10), beispielsweise eine Rohr oder einen Stab, aufweisen, mit mindestens einem Mehrfachnocken (15) entsprechend einem der Ansprüche 1 bis 10, mit mindestens drei axial nebeneinander angeordneten Nockenkonturen, **dadurch gekennzeichnet, dass** jeweils abwechselnd, bis die benötigte Anzahl Nockenkonturen erreicht ist:
• zunächst ein erster Teilnocken (1), der eine Nockenkontur aufweist,
• als nächstes ein Ring (3), der eine Nockenkontur aufweist und
• dann ein weiterer Teilnocken (2), der eine Nockenkontur aufweist,
über die Tragwelle (10) geschoben werden und anschließend am vorbestimmten axialen Ort mit vorgegebenen Radialwinkeln an der Tragwelle (10), zur Bildung des Mehrfachnockens (15), axial und verdrehsicher befestigt werden.

15. Verfahren zum Herstellen gebauter Nockenwellen nach Anspruch 12 oder 14, **dadurch gekennzeichnet, dass** zur Befestigung mindestens eines der Teilnocken (1, 2) ein Schweißstrahl (X), beispielsweise ein Laser- oder Elektronenstrahl, durch den Teilnocken (1, 2) radial an der Axialposition, an der der Ring (3) vom zu verschweissenden Teilnocken (1, 2) mit einem Spalt (16) beabstandet ist, hindurchgeleitet wird und damit der Teilnocken (1, 2) mit der Tragwelle (10) zumindest punktuell verschweißt wird.

## Claims

1. Built-up multiple cam for a camshaft, comprising
• a first partial cam (1) having a bore (12), a cam contour A (4) and a joint contour (7) which is disposed axially adjacent thereto and comprises an outer surface (7a),
• a second partial cam (2) having a bore (12), a cam contour A (5) and a joint contour (8) which is disposed axially adjacent thereto and comprises an outer surface (8a),
• a ring (3) having a cam contour B (6), which is different from the cam contour A, and an inner contour (9) which comprises an inner surface (9a), wherein the ring (3) can be slid with its inner surface (9a) on to the outer surfaces (7a, 8a) of the partial cams (1, 2),
• and connection means which are effective between the ring (3) and the partial cams (1, 2) and ensure a firm connection between these components.

2. Built-up multiple cam as claimed in claim 1, **characterised in that** the inner contour (9) of the ring (3) and the joint contours (7, 8) of the partial cams (1, 2) are non-circular.

3. Built-up multiple cam as claimed in claim 1 or 2, **characterised in that** the connection means which are effective between the ring (3) and the partial cams (1, 2) are formed as an interference fit and/or form-fit.

4. Built-up multiple cam as claimed in claim 1 to 3, **characterised in that** on at least one of the two partial cams (1, 2) in the region of the transition from the joint contour (7, 8) to the cam contour (4, 5) there is disposed a shoulder (13) which protrudes in a radial direction beyond the outer surface (7a, 8a) of the partial cam (1, 2).

5. Built-up multiple cam as claimed in claim 4, **characterised in that** the shoulder (13) is formed in one piece with the partial cam (1, 2) e.g. as a radius or chamfer.

6. Built-up multiple cam as claimed in any one of the preceding claims, **characterised in that** the axial extension of the ring (3) is greater than the sum of the axial extensions of the joint contours (7, 8).

7. Built-up multiple cam as claimed in any one of the preceding claims, **characterised in that** the outer surfaces (7a, 8a) are provided with engraving which has been applied e.g. by roller-burnishing or by knurling.

8. Built-up multiple cam as claimed in any one of the preceding claims, **characterised in that** the inner ring surface (9a) comprises engraving or an axially extending toothing arrangement.

9. Built-up multiple cam as claimed in any one of the preceding claims, **characterised in that** the inner contour (9) of the ring (3) comprises a radial widened portion on its axial end regions.

10. Built-up multiple cam as claimed in any one of the preceding claims, **characterised in that** in at least one end region of at least one of the partial cams (1, 2), the bore (12) comprises an inner contour (12a, 12b) which is widened in a funnel-like manner with respect to the bore (12).

11. Built-up camshaft having at least one multiple cam as claimed in any one of claims 1 to 10.

12. Method of producing built-up camshafts having at least one multiple cam (15) as claimed in any one of claims 1 to 10, **characterised by** the method steps of:
a) Assembling the multiple cam (preassembly);
b) Sliding the preassembled multiple cam on to a support shaft (10) up to a predetermined portion (14) of the support shaft (10);
c) Fixing the multiple cam in an axial and torsion-resistant manner on this predetermined portion (14) of the support roller (10).

13. Method of producing built-up camshafts having at least one multiple cam (15) as claimed in any one of claims 1 to 10, **characterised by** the method steps of:
a) Providing a support shaft (10) which comprises at least one portion (14) which has been surface-finished by roller-burnishing or by knurling such that it comprises a larger outer diameter than the portions of the support shaft (10) which have not been machined,
b) Sliding the first partial cam (1), the ring (3) and the second partial cam (2) on to a portion of the support shaft (10) whose outer diameter has not been increased by roller-burnishing or by knurling and which adjoins the surface-finished portion (14), wherein the sliding-on procedure is performed in such a manner that the joint contours (7, 8) of the partial cams (1, 2) face towards the ring (3) and the desired angular position of the partial cams (1, 2) and of the ring (3) with respect to the support shaft (10) is adjusted,
c) Pressing-on the first partial cam (1), the ring (3) and the second partial cam (2) by sliding these components together on to the surface-finished portion (14) of the support shaft (10), wherein the ring (3) slides with its inner surface (9a) over the outer surfaces (7a, 8a) of the partial cams (1, 2), so that the multiple cam is formed and is fixed with a force-fit and/or form-fit in an axial and torsion-resistant manner at the designated position (portion (14)).

14. Method of producing built-up cam shafts which comprise a support shaft (10), e.g. a tube or a bar, having at least one multiple cam (15) as claimed in any one of claims 1 to 10, having at least three cam contours which are disposed axially adjacent to each other, **characterised in that**, in each case alternately until the required number of cam contours is achieved:
• initially a first partial cam (1) comprising a cam contour,
• followed by a ring (3) comprising a cam contour and
• then a further partial cam (2) comprising a cam contour
are slid over the support shaft (10) and are then attached to the support shaft (10) in an axial and torsion-resistant manner at the predetermined axial location with predetermined radial angles in order to form the multiple cam (15).

15. Method of producing built-up camshafts as claimed in claim 12 or 14, **characterised in that** in order to attach at least one of the partial cams (1, 2) a welding beam (X), e.g. a laser or electron beam is guided through the partial cam (1, 2) radially at the axial position, at which the ring (3) is spaced apart with a gap (16) from the partial cam (1, 2) which is to be welded, and therefore the partial cam (1, 2) is welded to at least certain points of the support shaft (10).

## Revendications

1. Came multiple composée pour un arbre à came, comprenant
- une première came partielle (1) avec un alésage (12), un contour de came A (4) et un contour de raccordement (7) agencé à proximité axiale et présentant une surface externe (7a),
- une seconde came partielle (2) avec un alésage (12), un contour de came A (5) et un contour de raccordement (8) agencé à proximité axiale et présentant une surface externe (8a),
- une bague (3) avec un contour de came B (6) différent du contour de came A, et un contour interne (9) présentant une surface interne (9a), la bague (9) pouvant être glissée avec sa surface interne (9a) sur les surfaces externes (7a, 8a) des cames partielles (1, 2),
- de même que des moyens de liaison qui agissent entre la bague (3) et les cames partielles (1, 2) et assurent une liaison ferme entre ces composants.

2. Came multiple composée selon la revendication 1, **caractérisée en ce que** le contour interne (9) de la bague (3) et les contours de raccordement (7, 8) des cames partielles (1, 2) ne sont pas circulaires.

3. Came multiple composée selon la revendication 1 ou 2, **caractérisée en ce que** les moyens de liaison qui agissent entre la bague (3) et les cames partielles (1, 2) sont réalisés sous la forme d'un ajustement serré et/ou d'un emboîtement.

4. Came multiple composée selon les revendications 1 à 3, **caractérisée en ce qu'**un épaulement (13) est prévu sur l'une au moins des deux cames partielles (1, 2) dans la région de la transition entre le contour de raccordement (7, 8) et le contour de came (4, 5), lequel épaulement ressort de la surface externe (7a, 8a) de la came partielle (1, 2) dans la direction radiale.

5. Came multiple composée selon la revendication 4, **caractérisée en ce que** l'épaulement (13) est réalisé d'une pièce avec la came partielle (1, 2), par exemple sous la forme d'un congé ou d'un chanfrein.

6. Came multiple composée selon l'une des revendications précédentes, **caractérisée en ce que** la dimension axiale de la bague (3) est supérieure à la somme des dimensions axiales des contours de raccordement (7, 8).

7. Came multiple composée selon l'une des revendications précédentes, **caractérisée en ce que** les surfaces externes (7a, 8a) sont pourvues d'une gravure, qui est par exemple réalisée par brunissage ou moletage.

8. Came multiple composée selon l'une des revendications précédentes, **caractérisée en ce que** la surface interne (9a) de la bague présente une gravure ou une denture axiale.

9. Came multiple composée selon l'une des revendications précédentes, **caractérisée en ce que** le contour interne (9) de la bague (3) présente un élargissement radial dans ses régions d'extrémités.

10. Came multiple composée selon l'une des revendications précédentes, **caractérisée en ce que** l'alésage (12) présente dans au moins une région d'extrémité de l'une au moins des cames partielles (1, 2) un contour interne (12a, 12b) qui s'élargit de manière conique par rapport à l'alésage (12).

11. Arbre à came composé avec au moins une came multiple selon l'une des revendications 1 à 10.

12. Procédé de fabrication d'un arbre à came composé avec au moins une came multiple (15) selon l'une des revendications 1 à 10, **caractérisé par** les étapes suivantes:
a) assemblage de la came multiple (prémontage)
b) placement de la came multiple prémontée sur un arbre de support (10) jusqu'à une section (14) prédéterminée de l'arbre de support (10);
c) fixation axiale et solidaire en rotation de la came multiple sur cette section prédéterminée (14) de l'arbre de support (10).

13. Procédé de fabrication d'arbres à came composé avec au moins une came multiple (15) selon l'une des revendications 1 à 10, **caractérisé par** les étapes suivantes:
a) fourniture d'un arbre de support (10) qui présente au moins une section (14) traité en surface par brunissage ou moletage de telle sorte qu'elle présente un diamètre extérieur accru par rapport aux sections non traitées de l'arbre de support (10),
b) placement par glissement de la première came partielle (1), de la bague (3) et de la seconde came partielle (2) sur une section de l'arbre de support (10) dont le diamètre externe n'a pas été augmenté par brunissage ou moletage, et qui est contiguë à la section (14) traitée en surface, le placement par glissement se faisant de telle sorte que les contours de raccordement (7, 8) des cames partielles (1, 2) sont tournés vers la bague (3), et que les cames partielles (1, 2) et la bague (3) sont positionnées angulairement de la manière voulue par rapport à l'arbre de support (10),
c) ajustement serré de la première came partielle (1), de la bague (3) et de la seconde came partielle (2) par glissement commun de ces composants sur la section (14) traitée en surface de l'arbre de support (10), la bague (3) glissant avec sa surface interne (9a) sur les surfaces externes (7a, 8a) des cames partielles (1, 2), de façon à former la came multiple, et à la fixer fermement, axialement et en rotation dans la position prévue (section (14)), par frottement et/ou emboîtement.

14. Procédé de fabrication d'arbres à came composés, qui présentent un arbre de support (10), par exemple un tube ou une barre, avec au moins une came multiple (15) selon l'une des revendications 1 à 10, avec au moins trois contours de came disposés côte à côte, **caractérisé en ce que**, alternativement, jusqu'à avoir atteint le nombre voulu de contours de cames:
- d'abord une première came partielle (1) qui présente un contour de came,
- ensuite une bague (3) qui présente un contour de came, et
- enfin une autre came partielle (2) qui présente un contour de came,
sont glissées sur l'arbre de support (10) et sont ensuite fixées fermement dans le sens axial et en rotation, dans une position axiale prédéterminée, selon des angles radiaux prédéterminés sur l'arbre de support (10) pour former la came multiple (15).

15. Procédé se fabrication d'arbres à came composés selon la revendication 12 ou 14, **caractérisé en ce que**, pour la fixation d'au moins l'une des cames partielles (1, 2), un faisceau de soudage (X), par exemple un faisceau laser ou d'électrons, est conduit à travers la came partielle (1, 2) radialement dans la position axiale à laquelle la bague (3) est séparée de la came partielle (1, 2) à souder par un écartement (16), et la came partielle (1, 2) est ainsi soudée au moins ponctuellement à l'arbre de support 10.
